(19) Europäisches Patentamt / European Patent Office / Office européen des brevets

(11) **EP 3 608 926 A1**

(12) **EUROPEAN PATENT APPLICATION**
published in accordance with Art. 153(4) EPC

(43) Date of publication:
**12.02.2020 Bulletin 2020/07**

(21) Application number: **18781747.3**

(22) Date of filing: **05.04.2018**

(51) Int Cl.:
**H01F 7/02** (2006.01)     **H01F 1/057** (2006.01)
**H01F 41/02** (2006.01)     **H02K 15/03** (2006.01)
**H02K 41/02** (2006.01)

(86) International application number:
**PCT/JP2018/014632**

(87) International publication number:
**WO 2018/186478 (11.10.2018 Gazette 2018/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.04.2017 JP 2017076612**

(71) Applicant: **Nitto Denko Corporation**
**Ibaraki-shi, Osaka 567-8680 (JP)**

(72) Inventors:
 • **FUJIKAWA, Kenichi**
 **Ibaraki-shi**
 **Osaka 567-8680 (JP)**
 • **YAMAMOTO, Takashi**
 **Ibaraki-shi**
 **Osaka 567-8680 (JP)**
 • **SAITO, Shoichiro**
 **Ibaraki-shi**
 **Osaka 567-8680 (JP)**
 • **OZAKI, Takashi**
 **Ibaraki-shi**
 **Osaka 567-8680 (JP)**
 • **KUME, Katsuya**
 **Ibaraki-shi**
 **Osaka 567-8680 (JP)**
 • **HIRANO, Yuki**
 **Ibaraki-shi**
 **Osaka 567-8680 (JP)**

(74) Representative: **Gill Jennings & Every LLP**
**The Broadgate Tower**
**20 Primrose Street**
**London EC2A 2ES (GB)**

(54) **RARE EARTH SINTERED MAGNET, METHOD FOR PRODUCING RARE EARTH SINTERED BODY, METHOD FOR PRODUCING RARE EARTH SINTERED MAGNET, AND LINEAR MOTOR USING RARE EARTH SINTERED MAGNET**

(57)     Disclosed is a rare earth-sintered magnet in which a plurality of magnetic material particles are sintered. Surface magnetic flux density has a greatest value of 350 mT to 600 mT, the rare earth-sintered magnet has a thickness of 1.5 mm to 6 mm, a cross section of the rare earth-sintered magnet taken along a thickness direction is non-circular, and the cross section has an area in which axes of easy magnetization of the magnetic material particles has polar anisotropic orientation.

FIG.6

EP 3 608 926 A1

**Description**

[Technical Field]

The present invention relates to a rare earth-sintered magnet, a method of manufacturing a rare earth-sintered body, a method of manufacturing a rare earth-sintered magnet, and a linear motor using a rare earth-sintered magnet.

[Background Art]

With respect to machine tools, vehicles, aircraft, wind turbines, and the like, generators that convert mechanical kinetic energy transmitted from engines or the like into electric energy, or conversely, motors (electric motors) that convert electrical energy into mechanical kinetic energy, etc. have been used commonly. Such a generator or motor is required to further increase an amount of power generation or torque with reduced size, as well as decreased weight.

In order to improve magnetic properties, with respect to a permanent magnet used in the above motor or the like, magnetic orientation is performed by applying a magnetic field from the outside, so that axes of easy magnetization of magnetic material particles included in the permanent magnet are oriented. In magnetic orientation, as a method of orienting axes of easy magnetization of magnetic material particles, parallel orientation in which axes of easy magnetization are oriented in directions parallel to each other is used, by way of example. However, a parallely oriented permanent magnet has a problem in that surface flux density is low (about 300 mT) since a magnetic field is produced on both sides of the magnet.

In light of the point described above, one way to improve surface magnetic flux density is known to arrange parallely oriented permanent magnets in a Halbach array (e.g., Japanese Unexamined Patent Application No. 2010-166703). Arrangement of permanent magnets in the Halbach array can produce increased magnetic flux in directions needed for arranged permanent magnets, thereby increasing an amount of power generation or torque of a generator or an electric motor. However, in order to arrange permanent magnets in a Halbach array, it is necessary to join a plurality of permanent magnets together in a manner such that they repel each other. For this reason, there is a problem of low productivity and high cost. On the other hand, instead of parallel orientation, Japanese Unexamined Patent Application Publication No. 2004-297843 discloses that a plurality of permanent magnets having polar anisotropic orientation have a same effect as the Halbach array described above.

[Citation List]

[Patent Literature]

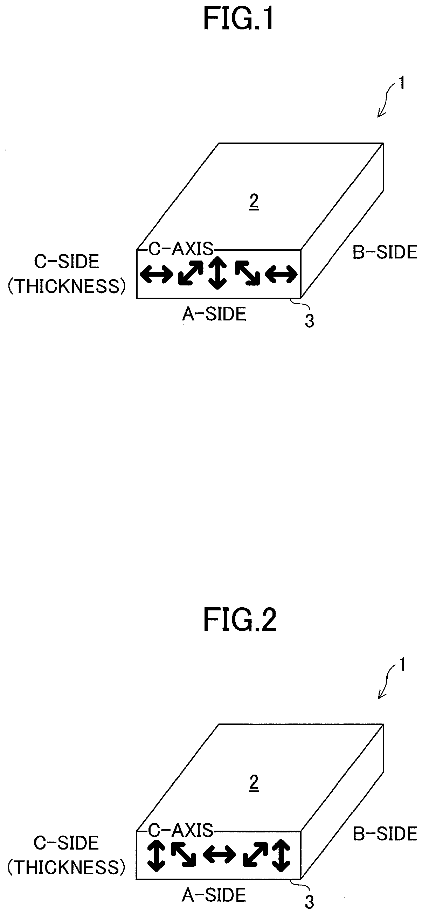

[PTL 1] Japanese Unexamined Patent Application Publication No. 2010-166703 (page 5, Fig. 2)
[PTL 2] Japanese Unexamined Patent Application Publication No. 2004-297843 (pages 4 and 5, Fig. 1)

[Summary of Invention]

The permanent magnets having polar anisotropic orientation in Patent Literature 2 seem to solve the problem about the joining in the Halbach array disclosed in Patent Literature 1 to some extent. However, each permanent magnet disclosed in Patent Literature 2 requires an increased thickness to achieve surface magnetic flux density (e.g., 350 mT to 600 mT) as desired. For example, a thickness is 10 mm, and a greatest value of surface magnetic flux density is 540 mT. Accordingly, it is still insufficient to increase an amount of power generation or torque, decrease the size, and reduce the weight of a generator or a motor.

The present invention is made to solve the above problem in the related art, and an objective of the present invention is to provide a rare earth-sintered magnet, a method of manufacturing a rare earth-sintered body, a method of manufacturing a rare earth-sintered magnet and a linear motor using a rare earth-sintered magnet whereby it is possible to achieve increased surface magnetic flux density and a decreased thickness, thereby allowing for an increase in amounts of power generation and torque, downsizing, and a reduction in weights of a generator or a motor.

In order to solve the problem, the present invention is directed to a rare earth-sintered magnet in which a plurality of magnetic material particles are sintered, wherein surface magnetic flux density has a greatest value of 350 mT to 600 mT, wherein the rare earth-sintered magnet has a thickness of 1.5 mm to 6 mm, wherein a cross section of the rare earth-sintered magnet taken along a thickness direction is non-circular, and wherein the cross section has an area in which axes of easy magnetization of the magnetic material particles have polar anisotropic orientation. Note that a greatest value of surface magnetic flux density refers to a greatest value (i.e., a greatest value of an absolute value of magnetic flux density) of a peak value of distribution of obtained surface magnetic flux density.

The present invention is directed to a method of manufacturing a rare earth-sintered body whose cross section taken along a thickness direction is non-circular and which has an area having polar anisotropic orientation, the method including: a step of forming polar anisotropic orientation of at least a portion of an area in a compact by applying a pulsed magnetic field to the compact, the compact being obtained by molding a mixture having magnet powder and a polymer resin; and a step of sintering the compact having polar anisotropic orientation.

The present invention is directed to a method of manufacturing a rare earth-sintered body including: a step of orienting at least a portion of an area in a compact by applying a pulsed magnetic field to the compact, the compact being obtained by molding a mixture having magnet powder and a polymer resin; and a step of sintering the oriented compact, wherein Shore A hardness of the mixture is greater than or equal to A30 at room temperature, and wherein the step of orienting is performed at a temperature that causes melt viscosity of the mixture to be lower than or equal to 900 Pa·s.

In a method of manufacturing a rare earth-sintered magnet according to the present invention, the method of manufacturing a rare earth-sintered body further includes a step of magnetizing a sintered body.

The present invention is directed to a linear motor including: one or more rare earth-sintered magnets, the one or more rare earth-sintered magnets being arranged in a linear direction; and an armature configured to face the rare earth-sintered magnets through an air gap, wherein one of the rare earth-sintered magnets and the armature is used as a stator and another is used as a movable element, so that the stator and the movable element move relative to each other.

[Advantageous Effects of Invention]

According to a rare earth-sintered magnet having the above configuration, it is possible to achieve both of increased surface magnetic flux density and a decreased thickness. As a result, a generator or a motor using a rare earth-permanent magnet can increase an amount of power generation and torque, decrease the size, and decrease the weight.

According to a method of manufacturing a rare earth-sintered body having the aforementioned configuration, it is possible to manufacture a precursor of a rare earth-sintered magnet capable of achieving both of increased surface magnetic flux density and a decreased thickness. As a result, a generator or a motor using a manufactured rare earth-sintered body can increase an amount of power generation or torque, decrease the size, and decrease the weight.

Also, according to a method of manufacturing a rare earth-sintered magnet having the aforementioned configuration, it is possible to manufacture a rare-earth permanent magnet that achieve both of increased surface magnetic flux density and a decreased thickness. As a result, a generator or a motor using a manufactured rare earth-permanent body can increase an amount of power generation or torque, decrease the size, and decrease the weight.

Further, according to a linear motor having the aforementioned configuration, torque can be increased compared to a case where parallely oriented permanent magnets known in the art are arranged. In addition, it is possible to decrease the size and weight of a linear motor while maintaining torque as required. It is also possible to reduce manufacturing costs by decreasing the volume of a magnet as required.

[Brief Description of Drawings]

[Fig. 1]
Fig. 1 is a diagram illustrating a first example of the whole rare earth-sintered magnet according to the present invention;
[Fig. 2]
Fig. 2 is a diagram illustrating a second example of the whole rare earth-sintered magnet according to the present invention;
[Fig. 3]

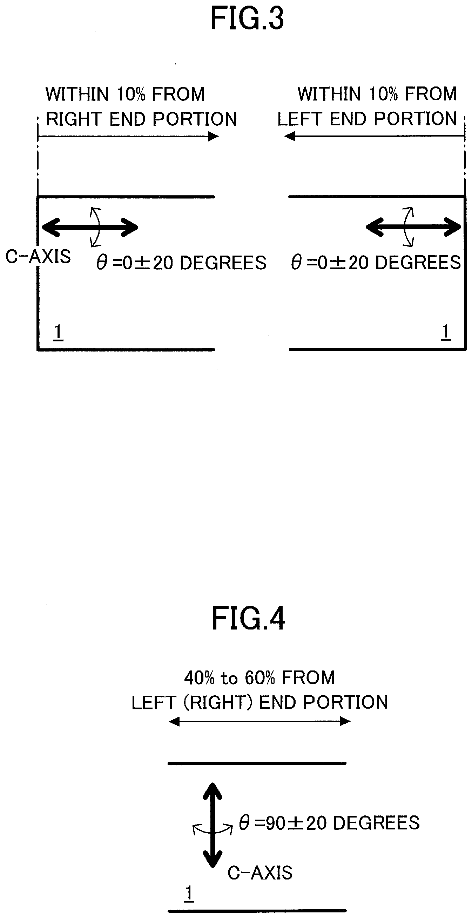

Fig. 3 is a diagram illustrating an orientation direction of axes of easy magnetization in proximity of each end portion of the rare earth-sintered magnet in the first example;
[Fig. 4]
Fig. 4 is a diagram illustrating an orientation direction of axes of easy magnetization in proximity of the middle of the rare earth-sintered magnet in the first example;
[Fig. 5]

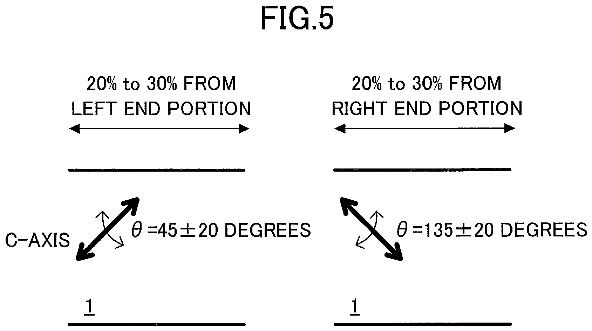

Fig. 5 is a diagram illustrating an orientation direction of axes of easy magnetization between each end portion and the middle of the rare earth-sintered magnet in the first example;

[Fig. 6]

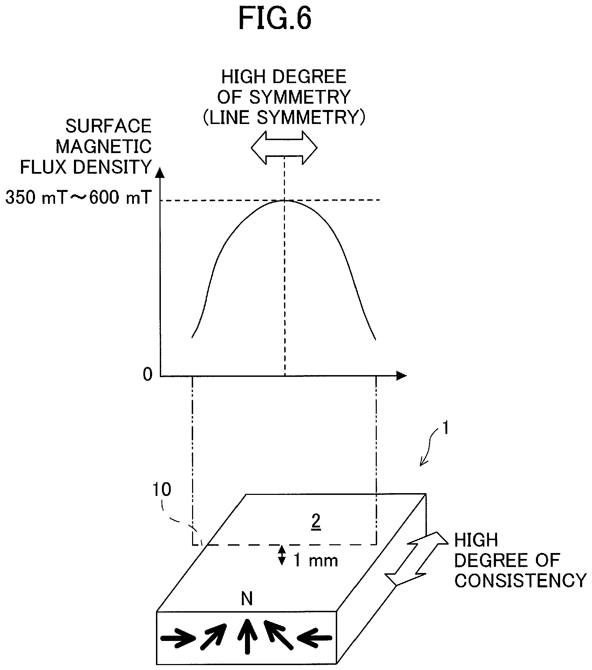

Fig. 6 is a diagram illustrating an example of distribution of surface magnetic flux density of a first surface of the rare earth-sintering magnet in the first example;
[Fig. 7]

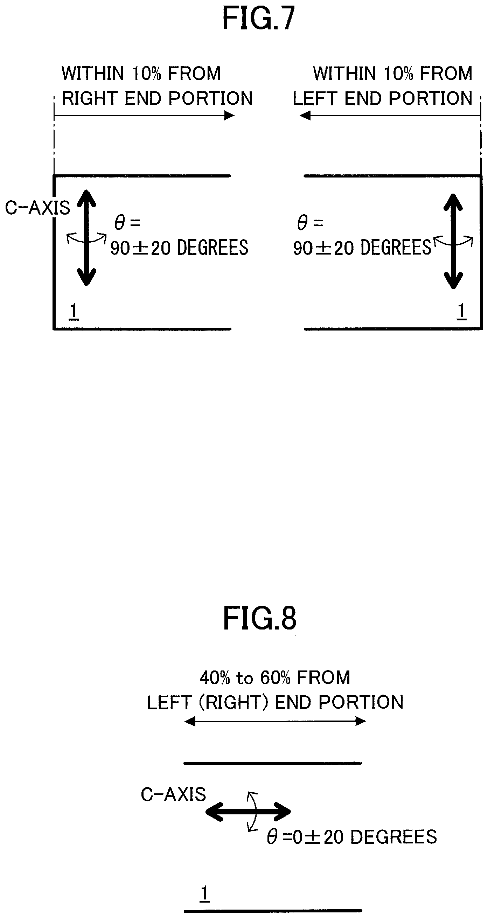

Fig. 7 is a diagram illustrating an orientation direction of axes of easy magnetization in proximity of each end portion of the rare earth-sintered magnet in the second example;
[Fig. 8]
Fig. 8 is a diagram illustrating an orientation direction of axes of easy magnetization in proximity of the middle of the rare earth-sintered magnet in the second example;
[Fig. 9]

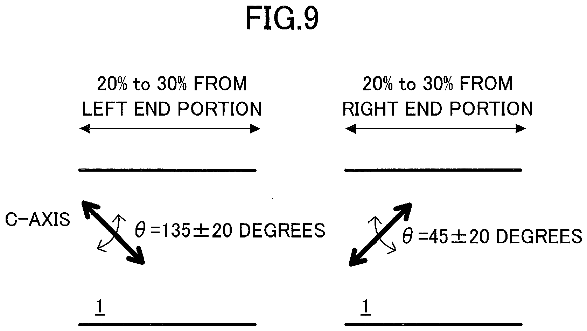

Fig. 9 is a diagram illustrating an orientation direction of axes of easy magnetization between each end portion and the middle of the rare earth-sintered magnet in the second example;
[Fig. 10]

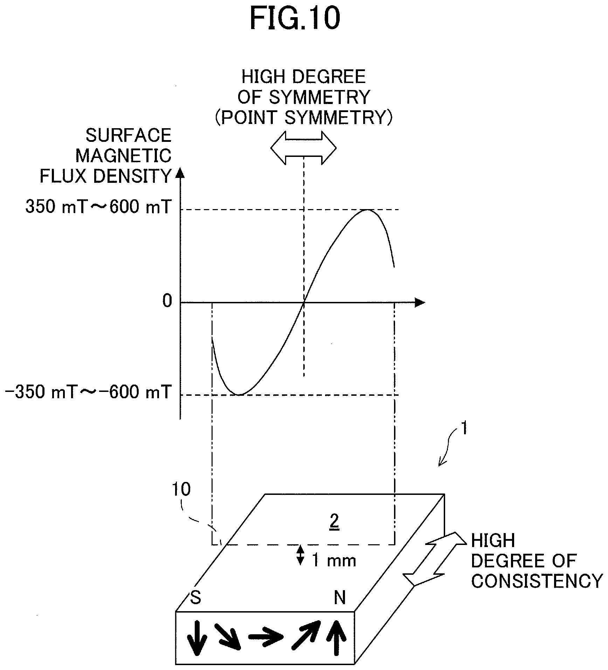

Fig. 10 is a diagram illustrating an example of distribution of surface magnetic flux density of a first surface of the rare earth-sintering magnet in the second example;
[Fig. 11]

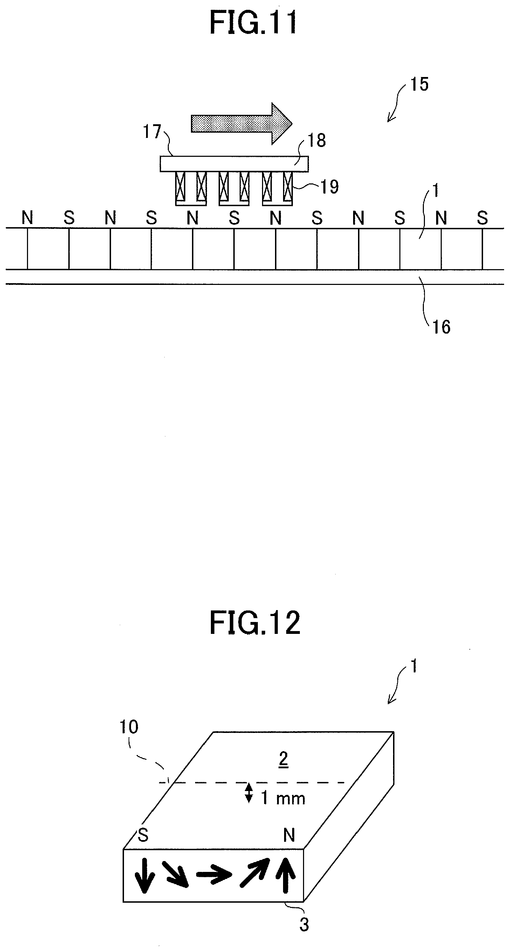

Fig. 11 is a diagram illustrating the whole linear motor according to the present invention;
[Fig. 12]
Fig. 12 is a diagram illustrating a measurement line used in measuring surface magnetic flux density;
[Fig. 13]

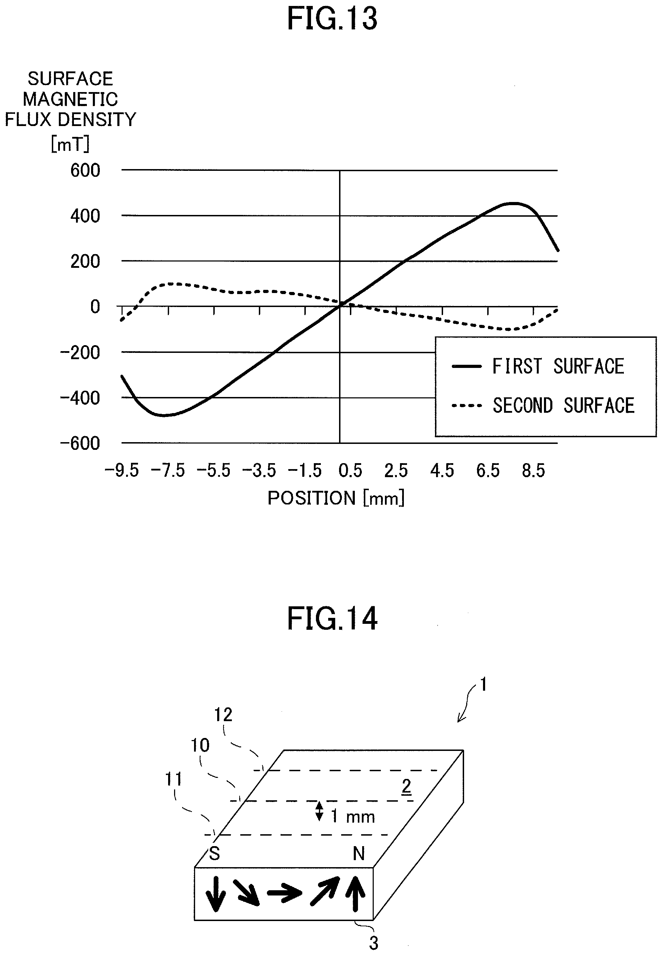

Fig. 13 is a diagram illustrating distribution of surface magnetic flux density according to Examples;
[Fig. 14]
Fig. 14 is a diagram illustrating a plurality of measurement lines used in measuring surface magnetic flux density; and
[Fig. 15]

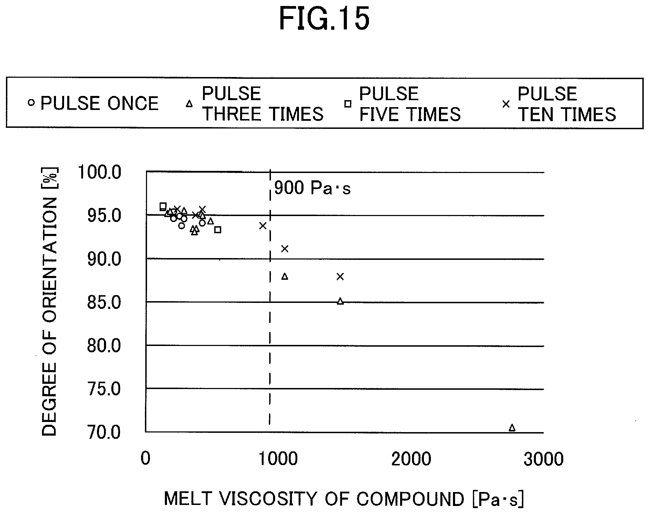

Fig. 15 is a graph illustrating a relationship between melt viscosity and a degree of orientation of a compound at an orientation temperature.

[Description of Embodiments]

Embodiments of a rare earth-sintered magnet, a method of manufacturing a rare earth-sintered body, a method of manufacturing a rare earth-sintered magnet, and a linear motor using rare earth-sintered magnets according to the present invention will be described below in detail with reference to the drawings.

[Configuration of rare earth-sintered magnet]

First, an example of a configuration of a rare earth-sintered magnet 1 according to the present invention will be described. Fig. 1 is a diagram illustrating a first example of the whole rare earth-sintered magnet 1. Fig. 2 is a diagram illustrating a second example of the whole rare earth-sintered magnet 1. As illustrated in Figs. 1 and 2, each of the respective rare earth-sintered magnets 1 according to the present invention includes a first surface 2, which has a length dimension (B-side) in a longitudinal direction and a width direction (A-side) perpendicular to the length direction. Further, each rare earth-sintered magnet 1 has a thickness dimension (C-side) in a thickness direction, between a second surface 3 opposite the first surface 2 (lower side) and the first surface 2.
The rare earth-sintered magnet 1 is a sintered magnet in which a plurality of magnetic material particles containing rare earth element(s) (Group 3 element(s) excluding actinium, or/and lanthanide) are sintered. The rare earth-sintered magnet 1 is preferably a rare earth based-anisotropic magnet such as an Nd-Fe-B based magnet.
Note that, for example, a content of each component with percentage by weight is R (R is one or more rare earth elements including Y): 27.0 to 40.0% by weight (preferably 28.0 to 35.0% by weight, and more preferably 28.0 to 33.0% by weight), B: 0.6 to 2% by weight (preferably 0.6 to 1.2% by weight, and more preferably 0.6 to 1.1% by weight), and Fe (preferably electrolytic iron): the remainder (65% by weight or more). Also, other element(s) such as Co, Cu, Al, Si, Ga, Nb, V, Pr, Mo, Zr, Ta, Ti, W, Ag, Bi, Zn, or/and Mg may be contained in a small amount to improve magnetic properties. As described below, each rare earth-sintered magnet 1 is fabricated by sintering and magnetizing, after performing magnetic orientation of: a compact of magnet powder molded by compaction; or a compact in which a mixture (slurry or a compound) of magnet powder and a polymer resin is molded.
Each rare earth-sintered magnet 1 is a permanent magnet having various shapes, e.g., a cuboid shape. Note that although the rare earth-sintered magnet 1 illustrated in each of Figs. 1 is cuboid, the shape of the rare earth-sintered magnet 1 can be changed as desired in accordance with use application. For example, a cuboid shape, a trapezoidal shape, a hog-backed shape, a fan shape can be used.
However, a cross sectional shape taken along a direction parallel to a plane, which includes a thickness direction and a width direction, is non-circular. Note that "non-circular" used in the specification means a shape in which a cross section has a shape other than a circle. For example, a so-called ring shape does not cover "non-circle". For example, a "non-circle" covers a rectangle (which may mean a square or a rectangle), a trapezoid, a hog-backed shape, a fan shape, or the like. Each of the rare earth-sintered magnets 1 illustrated in Figs. 1 and 2 is of rectangular shape.

Among surfaces constituting part of each of the rare earth-sintered magnets 1 illustrated in Figs. 1 and 2, a surface having an area in which surface magnetic flux density is highest is specifically defined as a first surface 2. In the example illustrated in Fig. 1, a surface with the A-side and the B-side situated at top is the first surface 2. In other words, the first surface 2 is a surface having an area in which surface magnetic flux density is higher with respect to a pair of opposite surfaces in which a difference in highest surface magnetic flux density is greatest, from among pairs of opposite surfaces. Similarly, in the example illustrated in Fig. 2 as well, a first surface 2 is a surface with the A-side and the B-side situated at top. Note that the first surface 2 has magnetic poles after magnetization. On the other hand, a surface that is situated (lower side) opposite the first surface 2 and that has an area in which magnetic flux density is lower than that of the first surface 2 is defined as a second surface 3. A value (an absolute value of highest magnetic flux density of an upper surface/an absolute value of highest magnetic flux density of a lower surface) obtained by dividing an absolute value of highest magnetic flux density of a first surface 2 (upper surface) by an absolute value of highest magnetic flux density of a second surface (lower surface) is preferably four times or more, and more preferably five times or more. Magnetic flux is selectively produced on the first surface 2, thereby allowing for a rare earth-sintering magnet 1 having the range described above. In the case of a generator or a motor using manufactured rare earth-sintering magnet(s), an amount of power generation or torque can be increased with decreased size, as well as reduced weight.

With respect to the rare earth-sintering magnet 1 according to the present embodiment, a thickness (i.e., a length of the C-side) in a direction perpendicular to the first surface 2 is 1.5 mm to 6 mm, and more preferably 1.5 mm to 5 mm. In the present embodiment, even when a range of thicknesses is set as the above range, polar anisotropic orientation allows for a greatest value of markedly high surface magnetic flux density of a first surface 2 specifically.

As an example, a length of an A-side of the rare earth-sintering magnet 1 is preferably 5 mm to 40 mm, and more preferably 10 mm to 30 mm. A length of the side B is preferably 5 mm to 100 mm, and more preferably 5 mm to 50 mm. Specifically, it is desirable that a ratio of a length of a C-side (thickness) to a length of an A-side (which corresponds to a length in a direction perpendicular to a thickness direction in a non-circular section) be in the range of 0.1 to 0.3, and more desirably in the range of 0.1 to 0.25. By setting such a range, a rate of increase in highest magnetic flux density can be increased, while a greatest value of highest magnetic flux density can be also increased.

An orientation direction of axes of easy magnetization of magnetic material particles contained in the rare earth-sintered magnet 1 is formed so as to be of polar anisotropic orientation. Specifically, it refers to orientation in which an orientation direction of axes of easy magnetization changes continuously along a given one direction (e.g., a left-right direction in each of the Figs. 1 and 2), as illustrated in Figs. 1 and 2, for example. The polar anisotropic orientation described above may be formed in the entire rare earth-sintered magnet 1 or may be formed in a portion of the rare earth-sintered magnet 1. In addition, an angle at a starting point of axes of easy magnetization being changed, or the number of magnetic poles, can be changed as suited.

Hereafter, polar anisotropic orientation of the rare earth-sintered magnet 1 will be described in more detail with reference to Figs. 1 and 2. In the following description, a surface with a B-side and a C-side situated on a left side of each of the Figs. 1 and 2 is referred to as a left end portion, and a surface with a B-side and a C-side situated on a right side is referred to as a right end portion.

With respect to polar anisotropic orientation of the rare earth-sintered magnet 1 illustrated in Fig. 1, as illustrated in Fig. 3, a dimension area of 10% or less in a case where from a left end portion to a right end portion is defined as 100% preferably includes an area in which an orientation direction $\theta$ of axes of easy magnetization is 0° ±20°. Note that a direction from a left end portion to a right end portion of an A side is viewed as a reference angle (0 degrees). Similarly, as illustrated in Fig. 3, a dimension area of 10% or less in a case where from a right end portion to a left end portion is defined as 100% also includes an area in which an orientation direction of axes of easy magnetization is 0° ±20°.

Also, as illustrated in Fig. 4, a dimension area (middle area) of 40 to 60% in a case where from a right (left) end portion to a left (right) end portion is defined as 100% includes an area in which an orientation direction $\theta$ of axes of easy magnetization is 90° ±20°.

More preferably, as illustrated in Fig. 5, a dimension area of 20 to 30% in a case where from a left end portion to a right end portion is defined as 100% includes an area in which an orientation direction of axes of easy magnetization is 45° ±20°. Also, a dimension area of 20 to 30% in a case where from a right end portion to a left end portion is defined as 100% includes an area in which an orientation direction of axes of easy magnetization is 135° ±20°.

With respect to the rare earth-sintered magnet 1 having the above orientation as illustrated in Fig. 1, an N pole or an S pole is created in proximity of the middle of a first surface 2, after magnetization. For example, in an example illustrated in Fig. 6, an N pole is created. When surface magnetic flux density in a normal direction of the first surface 2 is measured along a measurement line 10 set with respect to an A-side, distribution of surface magnetic flux density indicates an angle pattern as illustrated in Fig. 6. Specifically, assuming that the measuring line 10 is at a distance of 1 mm from a magnet surface, a greatest value of surface magnetic flux density is in the range of 350 mT to 600 mT, preferably 400 to 600 mT, and more preferably 450 to 600 mT. The rare earth-sintered magnet 1 illustrated in Fig. 1 has a greatest value of surface magnetic flux density in proximity of the middle thereof. Note that distribution of surface magnetic flux density provides a high degree of consistency even when a measurement line 10 is displaced with respect to a B-side direction. In other words, even when a measurement line 10 is set in proximity to an A-side or is set in proximity to the middle so as to be away from an A-side, distribution of surface flux density can indicate an approximate same pattern. Further, distribution of surface flux density has a high degree of symmetry (line symmetry) through an axis (axis along which a greatest value of surface magnetic flux density is indicated) passing through the middle of a measurement line 10.

On the other hand, with respect to polar anisotropic orientation of the rare earth-sintered magnet 1 illustrated in Fig. 2, as illustrated in Fig. 7, a dimension area of 10% or less in a case where from a left end portion to a right end portion is defined as 100% preferably includes an area in which an orientation direction θ of axes of easy magnetization is 90° ±20°. Similarly, as illustrated in Fig. 7, a dimension area of 10% or less in a case where from a right end portion to a left end portion is defined as 100% also includes an area in which an orientation direction of axes of easy magnetization is 90° ±20°.

Also, as illustrated in Fig. 8, a dimension area (middle area) of 40 to 60% in a case where from a right (left) end portion to a left (right) end portion is defined as 100% includes an area in which an orientation direction θ of axes of easy magnetization is 0° ±20°.

More preferably, as illustrated in Fig. 9, a dimension area of 20 to 30% in a case where from a left end portion to a right end portion is defined as 100% includes an area in which an orientation direction of axes of easy magnetization is 135° ±20°. Also, a dimension area of 20 to 30% in a case where from a right end portion to a left end portion is defined as 100% includes an area in which an orientation direction of axes of easy magnetization is 45° ±20°.

With respect to the rare earth-sintered magnet 1 having the above orientation as illustrated in Fig. 2, an N pole and an S pole are created in right and left end portions of a first surface 2, after magnetization. For example, in an example illustrated in Fig. 10, an S pole is created in a left end portion, and an N pole is created in a right end portion. When surface magnetic flux density in a normal direction of a first surface 2 is measured along a measurement line 10 set with respect to an A-side, distribution of surface magnetic flux density indicates a sinusoidal pattern as illustrated in Fig. 10. Specifically, assuming that a measuring line 10 is at a distance of 1 mm from a magnet surface, a greatest value of surface magnetic flux density is in the range of 350 mT to 600 mT, preferably 400 mT to 600 mT, and more preferably 450 mT to 600 mT. The rare earth-sintered magnet 1 illustrated in Fig. 2 has a greatest value of surface magnetic flux density in proximity of the left end portion and the right end portion. Note that distribution of surface magnetic flux density provides a high degree of consistency even when a measurement line 10 is displaced with respect to a B-side direction. In other words, even when a measurement line 10 is set in proximity to an A-side or is set in proximity to the middle so as to be away from the A-side, distribution of surface flux density can indicate an approximate same pattern. Further, distribution of surface flux density has a high degree of symmetry (point symmetry) through a middle point (a point at which surface magnetic flux density indicates zero).


[Configuration of Linear Motor]

Hereafter, a linear motor 15 using the rare earth-sintering magnets 1 described above will be described. As illustrated in Fig. 11, the linear motor 15 basically includes a stator 16 and a movable element 17 that is disposed opposite an upper surface of the stator 16 and that relatively moves over the stator 16, along a direction in which magnetic poles are arranged (a left-to-right direction in Fig. 11). Specifically, Fig. 11 illustrates an example of using rare earth-sintered magnets 1 illustrated in Fig. 2. Note that although explanation is provided for a movable armature type linear DC motor as an example of a linear motor, with reference to Fig. 11, the present invention is also applicable to other linear motors (e.g., a linear induction motor, a linear synchronous motor, a movable coil type linear DC motor, and a movable magnet type linear DC motor).

An armature is disposed on a surface of the movable element 17 so as to be opposite each rare earth-sintered magnet 1 through an air gap. The armature basically includes a movable element core 18, which is formed of a magnetic material such as an electromagnetic steel plate, and a plurality of windings 19 wound around the movable element core 18. Further, the movable element core 18 includes a yoke and a plurality of teeth protruding from the yoke in one direction. The windings 19 are wounded around the teeth.

On the other hand, a plurality of rare earth-sintered magnets 1 are disposed on a surface of the stator 16 opposite the movable element 17, as described above. Specifically, a first surface 2 is disposed opposite the movable element 17. Note that there may be a gap between disposed rare earth sintered magnets 1, or there may be no gap. When there is no gap, a plurality of rare earth-sintered magnets 1 may be joined together with adhesives or the like.

A back yoke for constituting a magnetic path is also disposed on a rear side of each rare earth-sintered magnet 1. The plurality of rare-earth sintering magnets 1 are configured such that respective S poles and N poles created by magnetization are alternately disposed along a direction in which the movable element 17 moves.

In such a configuration, when a current flows to the windings 19 of the movable element 17, attractive and repulsive forces are magnetically applied between the stator 16 and the movable element 17, so that the movable element 17 moves over the stator 16. Specifically, in the present invention, since each rare earth-sintered magnet 1 on the stator 16 has polar anisotropic orientation, a ratio of a greatest value of surface magnetic flux density to a thickness is increased. Accordingly, even when a thickness of each rare earth-sintered magnet 1 is decreased (e.g., 1.5 mm to 6 mm), increased torque can be provided.

[Method of manufacturing a rare earth-sintered body and a rare earth-sintered magnet]

Hereafter, one embodiment of a method of manufacturing a rare earth-sintered magnet 1 and a rare earth-sintered body that is a precursor of the rare earth-sintered magnet according to the present invention will be described.

The rare earth-sintered magnet 1 is manufactured by a method including the following processes (1) to (6), by way of example. (1) Pulverizing a raw material alloy for a rare earth magnet (which is hereafter referred to as a magnet alloy). (2) Mixing a polymer resin with pulverized magnet powder to mold it into a cuboid shape. (3) Applying a part of an annular magnetic field to a compact for 10 milliseconds or less to form polar anisotropic orientation of axes of easy magnetization of magnetic material particles. (4) Calcining the compact having polar anisotropic orientation. (5) Sintering a calcined body under pressure that is applied in a direction parallel to a B-side (i.e., in a direction perpendicular to an orientation direction of axes of easy magnetization) to obtain a rare earth-sintered body. (6) Applying an annular magnetic field to the rare earth-sintered body for magnetizing.

The pulverizing process of process (1) is performed by a jet mill pulverizer, for example. After pulverizing, a diameter of a particle of magnet powder is preferably 1 $\mu$m to 5 $\mu$m. A magnet alloy is preferably a rare earth-iron-boron based-sintered magnet having high magnetic properties.

The mixing process of process (2) is performed by a kneading machine. On the other hand, in the molding process, a mold having a cuboid shape, which is designed in consideration of a decrease in volume of a magnet during sintering, can be used. A polymer resin mixed with magnet powder is a material that does not oxidize a magnet alloy. When a polymer resin is mixed with magnet powder, a material that has viscosity as suited can be used. A thickness of a compact molded in the molding process is 1.5 mm to 6 mm, and more preferably 1.5 mm to 5 mm. Such a range of thicknesses allows orientation of axes of easy magnetization of material particles to be remarkably improved in applying an annular magnetic field.

As the polymer resin described above, a polymer with depolymerization is used by way of example. For example, such a polymer includes: polyisobutylene (PIB), which is an isobutylene polymer; polyisoprene (isoprene rubber, IR), which is an isoprene polymer; poly (a-methylstyrene), in which polypropylene and $\alpha$-methylstyrene are polymerized; polybutadiene (butadiene rubber, BR), which is a polymer of polyethylene and 1, 3-butadiene; polystyrene, which is a styrene polymer; styrene-isoprene block copolymer (SIS), which is a copolymer of styrene and isoprene; butyl rubber (IIR), which is a copolymer of isobutylene and isoprene; styrene-butadiene block copolymer (SBS), which is a copolymer of styrene and butadiene; styrene-ethylene-butadienestyrene copolymer (SEBS), which is a copolymer of styrene, ethylene and butadiene; styrene-ethylene-propylene-styrene copolymer (SEPS), which is a copolymer of styrene, ethylene and propylene; ethylene-propylene copolymer (EPM), which is a copolymer of ethylene and propylene; EPDM, in which ethylene and propylene and a diene monomer are copolymerized; 2-methyl-1-pentene polymerized resin, which is a polymer of 2-methyl-1-pentene; 2-methyl-1-butene polymerized resin, which is a polymer of 2-methyl-1-butene; or the like. A polymer used as the polymer resin may include a polymer or copolymer (e.g., polybutylmethacrylate or polymethylmethacrylate, etc.) of monomers having an oxygen atom or a nitrogen atom in a small amount. However, a polymer that does not have an oxygen atom or a nitrogen atom is preferred. With use of resin that does not have an oxygen atom or a nitrogen atom, contamination of magnetic material particles can be suppressed. Thereby, a decrease in magnetic properties such as residual magnetic flux density and coercivity can be prevented.

A polymer resin is added such that a ratio of the polymer resin to a total amount of magnetic material particles and the polymer resin is 1% by weight to 40% by weight, more preferably 3% by weight to 30% by weight, and still more preferably 3% by weight to 15% by weight. Such a range allows magnetic material particles to be uniformly dispersed in a compound, and thereby variation in density of magnetic material particles can be eliminated. Further, preferably, a volume fraction of magnetic material particles with respect to a total amount of magnetic material particles and organic material components including a polymer component and an oil component is 50 to 60%. Such a range allows magnetic material particles to be uniformly dispersed in a compound, and thereby variation in density of magnetic material particles can be eliminated.

In a process of applying an annular magnetic field of process (3), a pulsed magnetic-field generator that includes a multi-layer coil and a high-capacitance capacitor can be used. Polar anisotropic orientation can be achieved by instantaneously passing a current from the high-capacitance capacitor through the multi-layer coil to apply a magnetic field in a direction along a plane with an A-side and a C-side. In this case, a largest current is 8 kA to 16 kA, for example, and a pulse width is 0.3 milliseconds to 10 milliseconds, for example. Circular pulsed magnetic fields may be applied multiple times. Such a manner can allow for a greatest value (e.g., 350mT or more) even when a thickness of a compact is in the range described above. The above process of polar anisotropic orientation is performed at a temperature at which melt viscosity is 900 Pa·s or less, more preferably 700 Pa·s or less, and particularly preferably 300 Pa·s or less. In a case of 300 Pa·s or less, a degree of orientation can be greater than or equal to 93% even when a magnetic field is applied once. Strength of applied pulsed magnetic field is preferably 2T or more, and more preferably 3T or more. Orienting through such stress of a magnetic field allows a degree of orientation to be increased even for mixtures.

The calcining process of process (4) is performed in order to remove organic components (polymer resin) contained in a compact before sintering. For example, a calcination condition is 400 degrees C to 600 degrees C in a hydrogen atmosphere with a higher pressure than atmospheric pressure.

With a calcined compact is in the form of graphite, the sintering process of process (5) is performed by heating up with increasing a temperature of the compact to a sintering temperature (e.g., 700 degrees C to 1000 degrees C), as well as applying pressure ro the compact in a direction parallel to a B-side (i.e., a direction perpendicular to the orientation direction of axes of easy magnetization), so as to cause shrinkage due to sintering in a direction parallel to the B-side (i.e., a direction perpendicular to orientation direction of axes of easy magnetization). Note that as a sintering method, for example, hot press sintering, SPS sintering, or the like is used. In such a method, polar anisotropic orientation formed by applying an annular magnetic field can be successfully maintained after sintering. An applied pressure value is preferably 3 MPa to 20 MPa. Note that a rare earth-sintered body that is a precursor of a rare earth-sintered magnet 1 is manufactured by performing the processes up to the above process (5).

In the magnetizing process of process (6), equipment that is a same as that in process (3) can be used as a magnetizer. Magnetizing means a process in which an external magnetic field is applied to a rare earth-sintered body sintered in process (5) to create magnetization. A pulse width is preferably increased to several milliseconds in width to avoid inadequate magnetization.

Example

Hereafter, Examples of the present invention will be described below in comparison with comparative examples.

(Example 1)

A neodymium-iron-boron based alloy was pulverized using a jet mill pulverizer so as to have a particle diameter of 3 μm. Next, pulverized magnetic powder was mixed with a styrene-isoprene block copolymer (SIS resin from ZEON Corporation, Q3390), and was filled into a mold with sides of A×B×C sides=19 mm×14 mm×4 mm, for forming. Specifically, 4 parts by weight of SBS resin, 1.5 parts by weight of 1-octadecine and 4.5 parts by weight of 1-octadecene were mixed with 100 parts by weight of magnetic powder to prepare a compound of magnetic powder and a binder component. Using a pulsed magnetic field generator that includes a multi-layer coil and a high-capacitance capacitor, an annular magnetic field was partially applied to such a compact in a direction along a plane with an A-side and a C-side, for 0.7 milliseconds or less. This was repeated three times to form polar anisotropic orientation of axes of easy magnetization of magnetic material particles, as illustrated in Fig. 2. Note that in applying an annular magnetic field, a temperature of the compound was 120 degrees C. A compact having polar anisotropic orientation was calcined at a temperature of 500 degrees C in a hydrogen atmosphere with a pressure of 0.8 MPa. This calcined body was in a graphite mold, and was sintered at a temperature of 1000 degrees C with applying pressure in a direction parallel to the B-side. As a result, a rare earth-sintered body (magnet precursor) having an A-side of 19 mm, a B-side of 6.8 mm and a C-side (thickness) of 4 mm was obtained. Such a rare earth-sintered body was magnetized using a pulsed magnetic field generator, as a magnetizer, until highest magnetic flux density was approximately saturated, and thus a rare earth-sintered magnet was obtained.

(Comparative Example 1)

A sintered neodymium magnet (material N40) that has an A-side of 20 mm, a B-side B of 20 mm and a C-side (thickness) of 4 mm in dimensions and in which an orientation direction of axes of easy magnetization is parallel to the C-side was purchased from NeoMag Corporation.

(Comparative example 2)

A sintered neodymium magnet that has a same configuration as Comparative Example 1, except for a C-side of 10 mm, was purchased from NeoMag Corporation.

(Examples 2 and 3)

A test was carried out in a same manner as Example 1, except that a molded compound changed in dimensions. Note that a mold of 19 mm x 14 mm x 2 mm in Example 2 and a mold of 19 mm x 14 mm x 6 mm in Example 3 were used for molding. Accordingly, C-sides (thickness) of rare earth-sintered bodies were 2 mm and 6 mm, respectively.

(Example 4)

Unlike Example 1, a styrene-butadiene elastomer (SBS resin from JSR Corporation, TR2250) was used as a binder component. Specifically, 5 parts by weight of SBS resin, 1.2 parts by weight of 1-octadecine and 3.6 parts by weight of 1-octadecene were mixed with 100 parts by weight of magnetic powder to prepare a compound of magnetic powder and the binder component.
Also, unlike Example 1, an orientation temperature at which magnetic fields were applied was 150 degrees C. The magnetic fields were applied five times. Other conditions were same as Example 1, and a test was carried out.

(Example 5)

Unlike Example 1, a styrene-butadiene elastomer (SBS resin from JSR Corporation, TR 2003) was used as a binder component. Specifically, 4.9 parts by weight of SBS resin, 1.2 parts by weight of 1-octadecine and 3.6 parts by weight of 1-octadecene were mixed with 100 parts by weight of magnetic powder to prepare a compound of magnetic powder and the binder component.
Also, unlike Example 1, an orientation temperature at which magnetic fields were applied was 150 degrees C. The magnetic fields were applied five times. Other conditions were same as Example 1, and a test was carried out.

(Example 6)

Unlike Example 1, a styrene-butadiene elastomer (SBS resin from JSR Corporation, TR 2003) was used as a binder component. Specifically, 4 parts by weight of SBS resin, 1.5 parts by weight of 1-octadecene, and 4.5 parts by weight of 1-octadecene were mixed with 100 parts by weight of magnetic powder to prepare a compound of magnetic powder and binder components.
Unlike Example 1, an orientation temperature at which magnetic fields were applied was 150 degrees C, and the magnetic fields were applied five times. Other conditions were same as Example 1, and a test was carried out.

(Reference Examples)

A test was carried out in a same manner as Example 1, except that a molded compound changed in dimensions. Note that in Example 3, a mold of 19 mm x 14 mm x 10 mm was used for molding. Accordingly, a C-side (thickness) of a rare earth-sintered body was 10 mm.

<Evaluation>

[Peak value of surface magnetic flux]

With respect to a rare earth-sintered magnet used in each of the Examples and Comparative Examples 1 and 2, surface magnetic flux density was measured using a measuring device (MTX-5R) for distribution of three-dimensional magnetic field vectors, which was manufactured by IMS Corporation. In measurement, surface magnetic flux density of a magnet alone was measured using a non-magnetic fixture. As illustrated in Fig. 12, at a distance of 1 mm from a first surface 2, surface magnetic flux density was measured along a measurement line 10 parallel to an A-side in the middle of a B-side. Note that in addition to the first surface 2 having higher magnetic flux density, a second surface 3 that has lower magnetic flux density on an opposite side of the first surface 2 was subject to measurement.
Magnetic flux density in a normal direction of a magnet surface was measured in a case of being sampled every 0.004 mm. Measured results are shown below. Specifically, Fig. 13 illustrates distribution of surface magnetic flux density for an Example.

[Table 1]

| | THICKNESS OF MAGNET [mm] | ORIENTATION DIRECTION | HIGHEST MAGNETIC FLUX DENSITY | | | | RATE OF INCREASE IN HIGHEST MAGNETIC FLUX DENSITY | UPPER SURFACE SYMMETRY OF MAGNETIC FLUX | |
|---|---|---|---|---|---|---|---|---|---|
| | | | DIPOLE POLAR ANISOTROPIC ORIENTATION [mT] | | UPPER SURFACE/ LOWER SURFACE | HIGHEST MAGNETIC FLUX DENSITY/ THICKNESS [mT/mm] | (POLAR ANISOTROPY/ PARALLEL) | SYMMETRY THROUGH MEASUREMENT LINE | COINCIDENCE ON B-SIDE |
| | | | UPPER SURFACE | LOWER SURFACE | | | | | |
| E1 | 4 | DIPOLE POLAR ANISOTROPY | 473 | 95 | 5.0 | 118 | 2.4 TIMES | 0.27 | 0.11 |
| E2 | 2 | | 362 | 47 | 7.7 | 181 | 3.3 TIMES | 0.19 | 0.24 |
| E3 | 6 | | 547 | 71 | 7.7 | 91 | 1.8 TIMES | 0.39 | 0.11 |
| E4 | 4 | | 446 | - | - | 112 | 2.2 TIMES | 1.35 | - |
| E5 | 4 | | 461 | - | - | 115 | 2.3 TIMES | 0.91 | - |
| E6 | 4 | | 483 | - | - | 113 | 2.4 TIMES | 0.88 | - |
| CE1 | 2 | PARALLEL | 200 | - | - | 100 | - | - | - |
| CE2 | 10 | | 404 | - | - | 40 | - | - | - |
| RE | 10 | DIPOLE POLAR ANISOTROPY | 591 | 51 | 11.6 | 59 | 1.5 TIMES | 0.16 | 0.42 |

In Example 1, a greatest value (absolute value) of surface magnetic flux density was 473 mT with respect to a first surface 2, while it was 95 mT with respect to a second surface 3. A ratio of the greatest value (absolute value) of surface magnetic flux density of the first surface 2 to a greatest value (absolute value) of surface magnetic flux density of a surface with sparse magnetic flux was 5.0 times. From this point, it was found that magnetic flux density of the first surface 2 was very high compared to the second surface 3, with respect to the rare earth-sintering magnet 1 according to the present embodiment. It was found that magnetic flux was efficiently concentrated on only one surface.

With respect to the rare earth-sintered magnet 1 used in each of Examples 1 to 6, a thickness perpendicular to a first surface 2 was in the range of 1.5 mm to 6 mm, and a greatest value of surface flux density of the first surface 2 was in the range of 350 mT to 600 mT. Further, a value obtained by dividing a greatest value of surface magnetic flux density of the first surface 2 by magnet thickness was greater than or equal to 90 mT/mm, which indicated that, with respect to the magnet, surface magnetic flux density for each unit of thickness was very large. More preferably, a value obtained by dividing a greatest value of surface magnetic flux density of the first surface 2 by magnet thickness was 100 mT/mm or more, and still more preferably 110 mT/mm or more.

Further, in each Example, it was found that a rate of increase in highest magnetic flux density was 1.8 times or more, with respect to highest magnetic flux density of a rare earth-sintered magnet that was parallely oriented in a thickness direction whose dimensions were same.

On the other hand, in each of Comparative Examples 1 and 2, when a thickness in a direction perpendicular to a first surface 2 was in the range of 1.5 mm to 6 mm, a greatest value of surface magnetic flux density of the first surface 2 was lower than 350 mT. When a greatest value of surface magnetic flux density of a first surface 2 was in the range of 350 mT to 600 mT, a thickness in a direction perpendicular to the first surface 2 was greater than 6 mm. In other words, it was found that, with respect to a magnet, surface magnetic flux density for each unit of thickness was very low and that a thickness was required to be increased in order to achieve surface magnetic flux density (350 mT to 600 mT) as desired. In the reference example, although a rare earth-sintered magnet had same polar anisotropic orientation as that in each Example, highest magnetic flux density was 591 mT even in a case of a thickness of 10 mm in a direction perpendicular to a first surface 2. In other words, it was found that a value obtained by dividing a greatest value of surface magnetic flux density of the first surface 2 by magnet thickness was 59 mT/mm, which indicated that, with respect to the magnet, surface magnetic flux density for each unit of thickness was low.

[Consistency with respect to B-side direction]

Further, with respect to distribution of magnetic flux density along a measurement line of a first surface 2, consistency was evaluated when a measurement line was displaced with respect to a B-side direction. First, as illustrated in Fig. 14, a B-side was divided into four equal portions. In addition to a first measurement line 10 situated in the middle, each of a second measurement line 11 on a front side and a third measurement line 12 on a rear side was set at a distance of 1 mm so as to be away from a magnet surface in a direction parallel to an A-side, in a same manner as the first measurement line 10. Next, in a case of being sampled every 0.004 mm, magnetic flux density in a normal direction of a magnet surface was measured from one end to another end of each of the second measurement line 11 and the third measurement line 12. Next, consistency in distribution of magnetic flux density was calculated by using surface magnetic flux density a obtained through the second measurement line 11, as well as surface magnetic flux density b obtained through the third measurement line 12.

Specifically, assuming that a distance from one magnet end portion along a given measurement line was set as x and, further, surface magnetic flux density a and surface magnetic flux density b were respectively represented by Fa(x) and Fb(x) at a measured point that was at a distance x displaced from the one magnet end portion, consistency P in surface magnetic flux was expressed by Equation (1) below. Note that in the Equation, N denotes the number of measured points (19 mm/0.004 mm).

[Math. 1]

$$P = \frac{\left\{ \sum_{n=0}^{N} \left( |Fa(x_n)| - |Fb(x_n)| \right)^2 \right\}^{0.5}}{N} \quad \cdots (1)$$

As a result, as shown in Table 1 above, in Example 1, consistency in distribution of surface magnetic flux density with respect to a B-side direction was 0.11, which indicated a very high degree of consistency. It is considered that improvement in consistency in surface magnetic flux density is increasing orientation accuracy and is eliminating variation in density of magnetic material particles by forming orientation of a compound material through a pulsed magnetic field, as well as ability to sinter while maintaining this state. The consistency in distribution of surface magnetic flux density is preferably 0.5 or less, and more preferably 0.3 or less.

[Symmetry through measurement line]

Further, with respect to distribution of magnetic flux density along a given measurement line on a first surface 2, symmetry through a measurement line was evaluated. First, in a case of being sampled every 0.004 mm, at a distance of 1 mm so as to be away from a magnet surface, surface magnetic flux was measured from one end to another end of the measurement line 10 illustrated in Fig. 12. Symmetry in surface magnetic flux density was calculated based on obtained absolute values of surface magnetic flux density.

Specifically, when a distance from the middle (i.e., a point where surface magnetic flux density was 0) along a measurement line was set as x, surface magnetic flux density at a measured point that was at a distance x displaced from the middle in a width direction to one magnet end portion was represented by Fc(x), and surface magnetic flux density at a measured point, which was at a distance x displaced from the middle in a width direction to another magnet end portion, was represented by Fd(x). Symmetry Q in distribution of surface magnetic flux density was represented by Equation (2) below. Note that in Equation, N denotes the number of measured points in each direction (9.5 mm/0.004 mm).
[Math. 2]

$$Q = \frac{[\sum_{n=0}^{N}(|Fc(x_n)|-|Fd(x_n)|)^2]^{0.5}}{N} \quad \cdots (2)$$

As a result, as shown in Table 1 above, in Example 1, symmetry in distribution of surface magnetic flux density through the measurement line was 0.27, which indicated a very high degree of symmetry. It is considered that improvement in symmetry in surface magnetic flux density is increasing orientation accuracy and is eliminating variation in density of magnetic material particles by forming orientation of a compound material through a pulsed magnetic field, as well as ability to sinter while maintaining this state. The symmetry in distribution of surface magnetic flux density is preferably 1.5 or less, more preferably 1.0 or less, and still more preferably 0.5 or less.

[Melt viscosity of compound]

Melt viscosity was measured using capillograph 1DPMD-C from Toyo Seiki Seisaku-sho, Ltd. Melted resin in a heated cylinder was extruded at a constant rate, and the load was detected using a load cell. Further, melt viscosity η (Pa·s) was calculated based on Equations (3) to (6) blow.
[Math. 3]

$$Q = A \times v \quad \cdots (3)$$

[Math. 4]

$$\gamma = \frac{32Q}{\pi D^3} \quad \cdots (4)$$

[Math. 5]

$$\tau = \frac{pD}{4L} \quad \cdots (5)$$

[Math. 6]

$$\eta = \frac{\tau}{\gamma} \quad \cdots (6)$$

Where, Q denotes a volumetric flow rate ($mm^3$/s), A denotes a cross-sectional area of a piston ($mm^2$), v denotes piston velocity (mm/s), and $\gamma$ denotes apparent shear stress ($s^{-1}$). D denotes an inner diameter of a capillary (mm), $\tau$ denotes apparent shear stress (Pa), p denotes detected load (Pa), and L denotes a capillary length (mm). A shear rate was measured at 243 $s^{-1}$, and L/D was measured at 1/10.

In each of the Examples 1 to 6, melt viscosity of a compound is lower than or equal to 900 Pa·s at an orientation temperature that is a temperature at which a magnetic field is applied. When melt viscosity of a compound is decreased in orientation, magnetic particles can rotate easily in relation to an applied magnetic field, thereby suppressing variation in the orientation of each magnetic particle contained in a compound. As a result, highest magnetic flux density of an obtained rare earth magnet-sintered body can be improved. Further, a rare earth magnet-sintered body of which a thickness in a direction perpendicular to the first surface 2 is in the range of 1.5 mm to 6 mm and of which a greatest value of surface magnetic flux density of the first surface 2 is in the range of 350 mT to 600 mT can be fabricated. Further, when a compound is used, magnetic material particles can be uniformly dispersed, and thereby variation in density of the magnetic material particles can be suppressed. Accordingly, regional variations in distribution of surface magnetic flux density are decreased. As a result, symmetry and consistency of distribution of surface magnetic flux density are increased.

[Shore A hardness of compound]

Shore A hardness was measured by a Shore A hardness meter (HD-1100) from Ueshima Seisakusho Co., Ltd.

The hardness meter was pressed at five points that were spaced at intervals of 6 mm or more on a plane of a sample, in which two compounds each of which had a thickness of about 4 mm and each of which was formed by compression molding using a mold were laminated. Values marked by a scale were read 15 seconds after the hardness meter was pressed. The median through the measurement at the five points was set as shore A hardness of the compound.

In each of the Examples 1 to 6, it was found that Shore A hardness was greater than or equal to A30 at room temperature. In a case of such hardness or more, releasability from a mold is improved at room temperature, and thereby productivity can be improved.

[Table 2]

| | | BINDER | | | | | | | | |
|---|---|---|---|---|---|---|---|---|---|---|
| | RESIN | WEIGHT-AVERAGE MOLECULAR WEIGHT | RATIO OF STYRENE [%] | MFR OF RESIN [min] | SHORE A HARDNESS OF RESIN ALONE | RESIN/OCTADECYNE/OCTADECENE | SHORE A HARDNESS OF COMPOUND | MELT VISCOSITY OF COMPOUND [Pa·s] | ORIENTATION TEMPERATURE [DEGREES C] | NUMBER OF APPLICATION OF PULSED MAGNETIC FIELDS |
| E1 | SIS (Q3390) | $1.27*10^5$ | 48 | 15 | A65 | 4/1.5/4.5 | A48 | 170 | 120 | 3 |
| E2 | | | | | | | | | | |
| E3 | | | | | | | | | | |
| E4 | SBS (TR2250) | $1.09*10^5$ | 52 | 4 | A97 | 5/1.2/3.6 | A84 | 550 | 150 | 5 |
| E5 | SBS (TR2003) | $9.8*10^4$ | 43 | 18 | A80 | 4.9/1.2/3.6 | A69 | 288 | 150 | |
| E6 | | | | | | 4/1.5/4.5 | | 129 | 150 | |
| CE1 | - | - | - | - | - | - | - | - | - | - |
| CE2 | - | - | - | - | - | - | - | - | - | - |
| RE | SIS (Q3390) | $1.27*10^5$ | 48 | 15 | A65 | 4/1.5/4.5 | A48 | 170 | 120 | 3 |

When melt viscosity of a compound was lower than or equal to 900 Pa·s at temperature at which orientation was formed, and shore A hardness was smaller than or equal to A30 at room temperature, an improvement on highest magnetic flux density as well as releasability from a mold were achieved together. The compounds having physical properties described above are achieved by using resin in which a thermoplastic part contained in the resin is greater than or equal to 40%, for example. The thermoplastic part refers to styrene, propylene or ethylene, for example. In each of the Examples 1 to 6, the above properties of the compound are obtained by using resin in which a styrene content in the resin is greater than or equal to 40%, where styrene is a thermoplastic part. 40% or more of a part of styrene that is hard at room temperatures and that melts at high temperatures is contained, and thereby both of improvement on highest magnetic flux density and releasability from a mold can be acheived. When there are too many thermoplastic parts, a compound becomes very brittle and does not maintain the shape easily. A thermoplastic part content in a resin is preferably 80% or less, and more preferably 60% or less. It is also necessary to uniformly disperse magnetic particles in a compound. It is desirable to add a hydrocarbon based-material having a triple bond into an end part.

(Reference example: degree of orientation of parallely oriented magnet)

A pulsed magnetic field applied to a compound was changed to a uniform parallel magnetic field along a C-side (thickness) direction, and a compound composition and an orientation condition were changed as shown in Table 3. Except for those changes, a test was carried out in a same manner as Example 1. Note that sinter was performed by sintering at 1000 degrees C in a decreased-pressure atmosphere, without applying pressure. A degree of orientation indicated a ratio of Br to Js (Br/Js x 100 [%]) when a magnetic field of 80 kOe was applied to a rare earth-sintered magnet.

It was found that when melt viscosity of a compound was lower than or equal to 900 Pa·s at an orientation temperature, which was a temperature of a compound when a pulsed magnetic field was applied, a degree of orientation of a rare earth-sintered magnet was greater than or equal to 93%. This is possibly because a decrease in melt viscosity of a compound allows magnetic particles to easily rotate and thus easily orient the magnetic particles along a direction of a pulsed magnetic field. In addition, although a degree of orientation tends to be improved as the number of applied pulsed magnetic fields increases, it is preferable that the number of applied magnetic fields be decreased in terms of productivity. In a case where melt viscosity of a compound is decreased, even for a small number of applications of pulsed magnetic fields a degree of orientation can be improved. Accordingly, melt viscosity of a compound at an orientation temperature is preferably 900 Pa·s or less, more preferably 700 Pa·s or less, and particularly preferably 300 Pa·s or less. In a case of 300 Pa·s or less, a degree of orientation can be greater than or equal to 93% even when a magnetic field is applied once (Fig. 15).

[Table 3]

| | RESIN | WEIGHT-AVERAGE MOLECULAR WEIGHT | RATIO OF STYRENE [%] | BINDER COMPOSITION — RESIN/ OCTADECYNE/ OCTADECENE | SHORE A HARDNESS OF COMPOUND | MELT VISCOSITY OF COMPOUND [Pa·s] | ORIENTATION TEMPERATURE [DEGREES C] | NUMBER OF PULSES | DEGREE OF ORIENTATION [%] |
|---|---|---|---|---|---|---|---|---|---|
| RE1 | SBS_TR2250 | $1.09*10^5$ | 52 | 5/1.2/3.6 | A84 | 550 | 150 | 3 | 93.3 |
| RE2 | | | | | | | | 5 | 94.4 |
| RE3 | | | | 4/1.5/4.5 | A61 | 234 | 150 | 10 | 95.7 |
| RE4 | | | | | | 378 | 120 | 3 | 93.4 |
| RE5 | | | | | | | | 10 | 95.0 |
| RE6 | | | | | | 429 | 150 | 3 | 94.9 |
| RE7 | | | | | | | | 10 | 95.7 |
| RE8 | | | | | | | | 1 | 94.1 |
| RE9 | | | | | | 267 | 140 | 1 | 93.8 |
| RE10 | | | | | | 214 | 160 | 1 | 94.6 |
| RE11 | | | | 5/1/3 | A88 | 885 | 180 | 10 | 93.8 |
| RE12 | SBS_TR2003 | $9.80*10^4$ | 43 | 4.9/1.2/3.6 | A69 | 492 | 130 | 3 | 94.3 |
| RE13 | | | | | | 423 | 140 | | 95.1 |
| RE14 | | | | | | 288 | 150 | 1 | 95.5 |
| RE15 | | | | | | | | | 94.6 |
| RE16 | | | | | | 256 | 160 | | 94.9 |
| RE17 | | | | | | 214 | 180 | | 95.4 |
| RE18 | | | | 4/1.5/4.5 | A46 | 189 | 120 | 3 | 95.3 |
| RE19 | | | | | | 129 | 150 | 3 | 95.9 |

| | RESIN | WEIGHT-AVERAGE MOLECULAR WEIGHT | RATIO OF STYRENE [%] | BINDER COMPOSITION RESIN/ OCTADECYNE/ OCTADECENE | SHORE A HARDNESS OF COMPOUND | MELT VISCOSITY OF COMPOUND [Pa·s] | ORIENTATION TEMPERATURE [DEGREES C] | NUMBER OF PULSES | DEGREE OF ORIENTATION [%] |
|---|---|---|---|---|---|---|---|---|---|
| RE20 | SIS_ Q3390 | $1.27*10^5$ | 48 | 4/1.5/4.5 | A48 | 170 | 120 | 3 | 95.2 |
| RE21 | | | | | | 132 | 150 | 3 | 96.1 |
| RE22 | | | | | | | | 5 | 96.1 |
| RE23 | PIB_ B150 | $2.68*10^6$ | - | 4/1.5/4.5 | A29 | 369 | 120 | 3 | 93.0 |
| RE24 | | | | | | 360 | 150 | 3 | 93.4 |
| RE25 | SBS_ TR2250 | $1.09*10^5$ | 52 | 5/1/3 | A88 | 2,758 | 90 | 3 | 70.6 |
| RE26 | | | | | | 1,463 | 120 | 3 | 85.2 |
| RE27 | | | | | | | | 10 | 88.0 |
| RE28 | | | | | | 1,049 | 150 | 3 | 88.0 |
| RE29 | | | | | | | | 10 | 91.2 |

17

(Reference example: relationship between shore A hardness and releasability with respect to compound at room temperature)

A degree of orientation becomes higher as melt viscosity of a compound decreases at a temperature at which orientation is formed. However, releasability from a mold tends to be decreased. In other words, a compound that decreases viscosity improves wettability on a mold surface, and causes tackiness. For this reason, an oriented compound is not easily removed from a mold, thereby decreasing productivity greatly.

It was found that increasing Shore A hardness at room temperature (i.e., hardening) was effective for improving releasability (Table 5). When Shore A hardness is greater than or equal to A30 at room temperature (23 degrees C), a percentage by weight of a compound adhering to a mold can be smaller than or equal to 1%. In a case of Shore A hardness of A40 or more, it can be smaller than or equal to 0.3%. In a case of Shore A hardness of A50 or more, adhesion can be eliminated.

[Table 4]

| RESIN TYPE | RESIN/ LUBRICANT/ PLASTICIZER [phr] | SHORE A HARDNESS | ADHESION OF COMPOUND TO MOLD SURFACE AFTER RELEASING | WEIGHT OF ADHESION/WEIGHT OF COMPACT [%] |
|---|---|---|---|---|
| SBS TR2250 | 4/1.5/4.5 | A61 | | 0 |
| SIS Q3390 | 4/1.5/4.5 | A48 | | 0.23 |
| | 5/1.5/4.5 | A39 | | 1 |
| PIB B150 | 4/1.5/4.5 | A29 | | 2.1 |

Note that the present invention is not limited to the above examples, and various modifications and changes can be made without departing from the spirit of the present invention.

For example, a pulverization condition, a kneading condition, a process of orientation through a magnetic field, a calcining process, a sintering process, and the like of a magnet powder are not limited to the conditions described in the above examples. For example, in the above examples, pulverizing is achieved through dry pulverization using a jet mill. However, raw materials of a magnet may be pulverized through wet pulverization using a bead mill. Also, when an atmosphere in a calcining process is a non-oxidizing atmosphere, it may be performed in an atmosphere other than a hydrogen atmosphere (e.g., a nitrogen atmosphere, a He atmosphere, an Ar atmosphere, etc.). Further, a calcining process may be performed under atmospheric pressure or pressure lower than atmospheric pressure. A calcining process may be omitted. In this case, organic components (polymer resin) are removed in a sintering process.

In the present embodiment, an Nd-Fe-B based magnet has been described by way of example, but other magnets (e.g., a cobalt magnet, an alnico magnet, and a ferrite magnet, etc.) may be used.

The present invention is not limited to each embodiment, and various modifications can be made within a scope of the claims. Embodiments which can be carried out by appropriately combining the technical manners disclosed in the different embodiments are also included within a scope of the present invention.

This application claims priority under Japanese Patent Application No. 2017-076612, filed April 7, 2017, the entire contents of which are hereby incorporated by reference.

[Reference Signs List]

| | |
|---|---|
| 1 | rare earth-sintered magnet |
| 2 | first surface |
| 3 | second surface |
| 10-12 | measurement line |
| 15 | linear motor |
| 16 | stator |
| 17 | movable element |
| 18 | movable core |
| 19 | winding |

**Claims**

1. A rare earth-sintered magnet in which a plurality of magnetic material particles are sintered,
   wherein surface magnetic flux density has a greatest value of 350 mT to 600 mT,
   wherein the rare earth-sintered magnet has a thickness of 1.5 mm to 6 mm,
   wherein a cross section of the rare earth-sintered magnet taken along a thickness direction is non-circular, and
   wherein the cross section has an area in which axes of easy magnetization of the magnetic material particles has polar anisotropic orientation.

2. The rare earth-sintered magnet according to claim 1, wherein in the non-circular cross section, a ratio of the thickness to a length in a direction perpendicular to the thickness direction is in the range of 0.1 to 0.3.

3. A method of manufacturing a rare earth-sintered body whose cross section taken along a thickness direction is non-circular and which has an area having polar anisotropic orientation, the method comprising:

   a step of forming polar anisotropic orientation of at least a portion of an area in a compact by applying a pulsed magnetic field to the compact, the compact being obtained by molding a mixture having magnet powder and a polymer resin; and
   a step of sintering the compact having polar anisotropic orientation.

4. A method of manufacturing a rare earth-sintered body comprising:

   a step of orienting at least a portion of an area in a compact by applying a pulsed magnetic field to the compact, the compact being obtained by molding a mixture having magnet powder and a polymer resin; and
   a step of sintering the oriented compact,
   wherein Shore A hardness of the mixture is greater than or equal to A30 at room temperature, and

wherein the step of orienting is performed at a temperature that causes melt viscosity of the mixture to be lower than or equal to 900 Pa·s.

5. The method of manufacturing a rare earth-sintered body according to claim 4, wherein the step of orienting includes a step of forming polar anisotropic orientation of at least a portion of an area in the compact.

6. The method of manufacturing a rare earth-sintered body according to claim 3 or 4, wherein a thickness of the compact to which a pulsed magnetic field is applied is in the range of 1.5 mm to 6 mm.

7. The method of manufacturing a rare earth-sintered body according to claim 3, wherein Shore A hardness of the mixture is greater than or equal to A30 at room temperature.

8. The method of manufacturing a rare earth-sintered body according to claim 3 or 5, wherein the step of forming polar anisotropic orientation is performed at a temperature that causes melt viscosity of the mixture to lower than or equal to 900 Pa·s.

9. The method of manufacturing a rare earth-sintered body according to claim 3 or 5, wherein the step of forming polar anisotropic orientation is performed at a temperature that causes melt viscosity of the mixture to be lower than or equal to 300 Pa·s.

10. The method of manufacturing a rare earth-sintered body according to any one of claims 3 to 9, wherein in the step of sintering, the compact is sintered under pressure.

11. The method of manufacturing a rare earth-sintered body according to any one of claims 3 to 10, wherein the polymer resin is a hydrocarbon based-resin without containing a heteroatom.

12. The method of manufacturing a rare earth-sintered body according to any one of claims 3 to 11, wherein a magnetic powder content in the mixture is in the range of 50% to 60% by volume.

13. The method of manufacturing a rare earth-sintered body according to any one of claims 3 to 12, further comprising a step of magnetizing a sintered body after the step of sintering the compact.

14. A linear motor comprising:

one or more rare earth-sintered magnets according to claim 1 or 2, the one or more rare earth-sintered magnets being arranged in a linear direction; and
an armature configured to face the rare earth-sintered magnets through an air gap,
wherein one of the rare earth-sintered magnets and the armature is used as a stator and another is used as a movable element, so that the stator and the movable element move relative to each other.

# FIG.1

# FIG.2

# FIG.3

WITHIN 10% FROM RIGHT END PORTION

WITHIN 10% FROM LEFT END PORTION

C-AXIS

$\theta = 0 \pm 20$ DEGREES

$\theta = 0 \pm 20$ DEGREES

1

1

# FIG.4

40% to 60% FROM
LEFT (RIGHT) END PORTION

$\theta = 90 \pm 20$ DEGREES

C-AXIS

1

# FIG.5

20% to 30% FROM
LEFT END PORTION
←————————→

20% to 30% FROM
RIGHT END PORTION
←————————→

C-AXIS    $\theta$ =45±20 DEGREES

$\theta$ =135±20 DEGREES

<u>1</u>

<u>1</u>

# FIG.6

HIGH DEGREE
OF SYMMETRY
(LINE SYMMETRY)

SURFACE
MAGNETIC
FLUX DENSITY

350 mT～600 mT

0

10

2

1 mm

1

N

HIGH
DEGREE OF
CONSISTENCY

# FIG.7

WITHIN 10% FROM RIGHT END PORTION

WITHIN 10% FROM LEFT END PORTION

C-AXIS

$\theta = 90 \pm 20$ DEGREES

$\theta = 90 \pm 20$ DEGREES

1

1

# FIG.8

40% to 60% FROM LEFT (RIGHT) END PORTION

C-AXIS

$\theta = 0 \pm 20$ DEGREES

1

# FIG.9

| 20% to 30% FROM LEFT END PORTION | 20% to 30% FROM RIGHT END PORTION |
|---|---|

C-AXIS $\theta$ =135±20 DEGREES

$\theta$ =45±20 DEGREES

1

1

# FIG.10

HIGH DEGREE
OF SYMMETRY
(POINT SYMMETRY)

SURFACE
MAGNETIC
FLUX DENSITY

350 mT～600 mT

0

−350 mT～−600 mT

1

10

2

1 mm

S          N

HIGH
DEGREE OF
CONSISTENCY

# FIG.11

# FIG.12

# FIG.13

SURFACE
MAGNETIC
FLUX DENSITY
[mT]

POSITION [mm]

—— FIRST SURFACE

---- SECOND SURFACE

# FIG.14

# FIG.15

| ○ PULSE ONCE | △ PULSE THREE TIMES | □ PULSE FIVE TIMES | × PULSE TEN TIMES |

MELT VISCOSITY OF COMPOUND [Pa·s]

## INTERNATIONAL SEARCH REPORT

| International application No. |
| --- |
| PCT/JP2018/014632 |

**A. CLASSIFICATION OF SUBJECT MATTER**
Int.Cl. H01F7/02(2006.01)i, H01F1/057(2006.01)i, H01F41/02(2006.01)i,
    H02K15/03(2006.01)i, H02K41/02(2006.01)i

According to International Patent Classification (IPC) or to both national classification and IPC

**B. FIELDS SEARCHED**

Minimum documentation searched (classification system followed by classification symbols)
Int.Cl. H01F7/02, H01F1/057, H01F41/02, H02K15/03, H02K41/02

Documentation searched other than minimum documentation to the extent that such documents are included in the fields searched
Published examined utility model applications of Japan     1922–1996
Published unexamined utility model applications of Japan   1971–2018
Registered utility model specifications of Japan           1996–2018
Published registered utility model applications of Japan   1994–2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2015/121917 A1 (NITTO DENKO CORP.) 20 August, 2015, paragraphs [0002], [0044]–[0045], [0052], [0058], [0062], [0065], [0070]–[0071], [0081], [0084], [0086], [0090]–[0091], [0094], [0096], [0102], fig. 4 & US 2017/0170695 A1, paragraphs [0002], [0067]–[0068], [0076], [0081], [0089], [0092], [0098]–[0099], [0110], [0113], [0116], [0120]–[0121], [0125], [0127], [0145], fig. 4 | 1–2<br>3–14 |
| Y | JP 2005-317845 A (MINEBEA CO., LTD.) 10 November, 2005, paragraph [0013] (Family: none) | 3–13 |
| Y | JP 1-27208 A (HITACHI METALS, LTD.) 30 January, 1989, page 5, upper left column, lines 4–7 & US 4888512 A1, specification, page 9, lines 56–61 | 3–13 |
| Y | JP 2004-297843 A (HITACHI METALS, LTD.) 21 October, 2004, paragraphs [0014]–[0015], fig. 1 (Family: none) | 14 |
| Y | JP 2010-104136 A (MITSUBISHI ELECTRIC CORP.) 06 May, 2010, paragraphs [0010]–[0011], fig. 1 (Family: none) | 14 |

☐ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 June 2018 (12.06.2018) | 26 June 2018 (26.06.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010166703 A
- JP 2004297843 A
- JP 2017076612 A